# EUROPÄISCHE PATENTSCHRIFT

(11) **EP 1 291 235 B1**
(45) Veröffentlichungstag und Bekanntmachung des Hinweises auf die Patenterteilung: **21.06.2006**
(21) Anmeldenummer: 02018428.9
(22) Anmeldetag: 16.08.2002
(51) Int. Cl.: B60N 2/16, B60N 2/62

(54) **Fahrzeugsitz mit Neigungseinsteller**
Vehicle seat with seat cushion inclination adjuster
Siège de véhicule avec dispositif d'inclinaison de l'assise

(30) Priorität: 01.09.2001 DE 10142962
(43) Veröffentlichungstag der Anmeldung: 12.03.2003
(73) Patentinhaber: KEIPER GmbH & Co. KG, 67657 Kaiserslautern (DE)
(72) Erfinder: Teufel, Ingo, 67806 Rockenhausen (DE); Mühlberger, Joachim, 67271 Obersülzen (DE)
(74) Vertreter: Patentanwälte Hosenthien-Held und Dr. Held

(56) Entgegenhaltungen:
- EP-A- 0 253 222
- DE-C- 19 942 975
- GB-A- 2 349 077
- PATENT ABSTRACTS OF JAPAN vol. 2000, no. 09, 13. Oktober 2000 (2000-10-13) -& JP 2000 158985 A (FUJI KIKO CO LTD), 13. Juni 2000 (2000-06-13)

## Beschreibung

Die Erfindung betriff einen Fahrzeugsitz, insbesondere einen Kraftfahrzeugsitz, mit den Merkmalen des Oberbegriffs des Anspruches 1.

Ein aus der DE 199 42 975 C1 bekannter Fahrzeugsitz dieser Art weist einen Sitzrahmen auf, dessen Vorderteil eine Quertraverse bildet, welche das vordere Ende einer das Sitzpolster aufnehmenden Sitzschale trägt und welche für die Neigungseinstellung des Sitzpolsters relativ zu den Seitenteilen des Sitzrahmens um eine horizontale Achse schwenkbar und dadurch höhenveränderlich ist. Dabei ist auf einer Seite ein Getriebebeschlag zur Einstellung des Neigungswinkels und auf der anderen Seite ein Gelenk vorgesehen. Zur Kompensation des Gewichts der Sitzschale, des Sitzpolsters und des Gewichts des Benutzers ist im Bereich des Gelenks eine Kompensationsfeder vorgesehen, mittels derer die Quertraverse am Sitzrahmen-Seitenteil abgestützt ist.

Der Erfindung liegt die Aufgabe zu Grunde, einen Fahrzeugsitz der eingangs genannten Art zu verbessern, insbesondere eine beanspruchungsgerechte Adaption der Kompensationsfeder zu schaffen. Diese Aufgabe wird erfindungsgemäß durch einen Fahrzeugsitz mit den Merkmalen des Anspruches 1 gelöst. Vorteilhafte Ausgestaltungen sind Gegenstand der Unteransprüche.

Dadurch, daß die Kompensationsfeder an einen beweglichen Teil des Höheneinstellers gekoppelt ist, vorzugsweise an diesem abgestützt ist, wird die Vorspannung der Kompensationsfeder höheneinstellerabhängig und damit eine belastungsgerechte Kompensationswirkung eingestellt. Bei einer Höheneinstellung in einer unteren Position, wie sie von großen und schweren Personen gewählt wird, besitzt die Kompensationsfeder bei einer beliebig gewählten Neigungseinstellung den größtmöglichen Energiegehalt und damit die größte Kompensationswirkung. Bei einer Höheneinstellung in einer oberen Position, wie sie von kleinen und leichten Personen gewählt wird, ist die Vorspannung bei gleicher Neigungseinstellung geringer.

In einer bevorzugten, einfach und damit kostengünstig herzustellenden Ausführungsform mit einer Schenkelfeder als Kompensationsfeder ist letztere zwischen einer beweglichen Quertraverse des Neigungseinstellers und einer Schwinge des Höheneinstellers angeordnet.

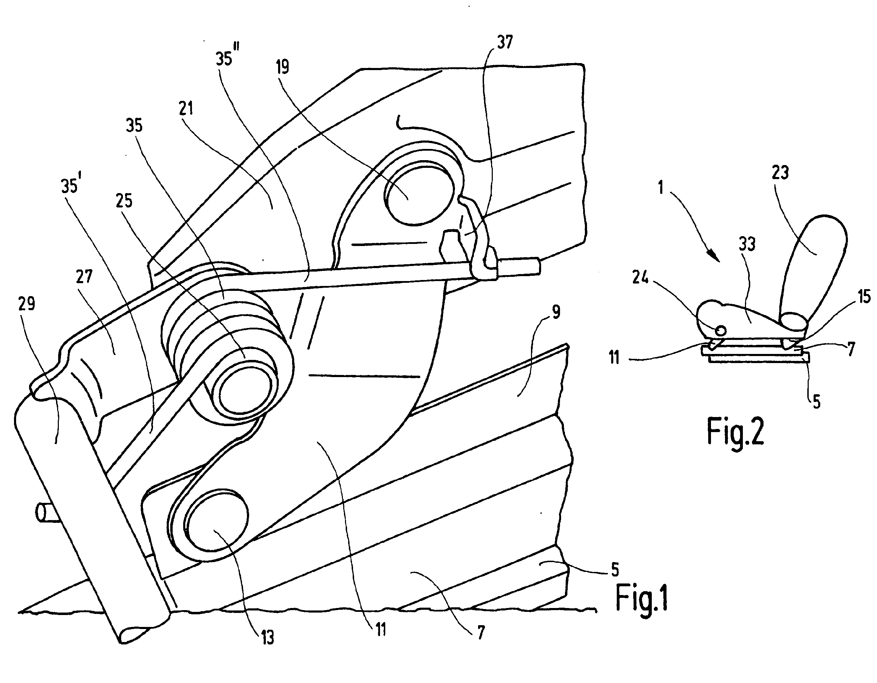

Im folgenden ist die Erfindung anhand eines in der Zeichnung dargestellten Ausführungsbeispiels näher erläutert. Es zeigen
- Fig. 1: eine perspektivische Teilansicht der Struktur des Ausführungsbeispiels im tunnelseitigen, vorderen Bereich, und
- Fig. 2: eine schematische, schwellerseitige Seitenansicht eines Fahrzeugsitzes.

Ein Fahrzeugsitz 1 ist für ein Kraftfahrzeug ausgebildet. Die Anordnung des Fahrzeugsitzes 1 im Kraftfahrzeug und dessen gewöhnliche Fahrtrichtung definieren die nachfolgend verwendeten Richtungsangaben. Der Fahrzeugsitz 1 weist als Längseinsteller auf seinen beiden Seiten je ein Sitzschienenpaar mit einer fahrzeugstrukturfesten Unterschiene 5 und einer in der Unterschiene 5 in Längsrichtung des Fahrzeugsitzes 1 geführten Oberschiene 7 auf. Die Sitzschienenpaare bilden den Unterbau des Fahrzeugsitzes 1. Jede Oberschiene 7 weist an ihrem vorderen Ende einen nach oben abstehenden Adapter 9, an welchem eine vordere Schwinge 11 mittels eines unteren Lagerbolzens 13 angelenkt ist. Die vorderen Schwingen 11 bilden zusammen mit entsprechenden hinteren Schwingen 15 einen Höheneinsteller für den Fahrzeugsitz 1. Die vorderen Schwingen 11 sind jeweils mit einem oberen Lagerbolzen 19 an einem Sitzrahmen-Seitenteil 21 eines Sitzrahmens angelenkt. Der Sitzrahmen trägt in seinem hinteren Bereich in an sich bekannter Weise eine Rückenlehne 23.

An dem schwellerseitigen Sitzrahmen-Seitenteil 21, welches sich auf der nach außen weisenden Seite des Fahrzeugsitzes 1 befindet, ist nach vorne weisend ein Sitzneigungseinstellbeschlag 24 mittels eines festen, ersten Beschlagteils angebracht. Von dem tunnelseitigen Sitzrahmen-Seitenteil 21, welches sich auf der nach innen weisenden Seite des Fahrzeugsitzes 1 befindet, steht ein Gelenkzapfen 25 nach innen ab. Auf dem Gelenkzapfen 25 ist eine obere Schwinge 27 schwenkbar gelagert. Eine horizontal quer zur Längsrichtung des Fahrzeugsitzes 1 angeordnete, als Rohr ausgebildete Quertraverse 29 verbindet die obere Schwinge 27 fest mit einem beweglichen, zweiten Beschlagteil des Sitzneigungseinstellbeschlags 24. Auf der Quertraverse 29 ist mit ihrem vorderen Ende eine Sitzschale gelagert, welche mit ihrem hinteren Ende im hinteren Bereich der Sitzrahmen-Seitenteile 21 beweglich gelagert ist und welche ein Sitzpolster 33 trägt. Durch eine Schwenkbewegung des zweiten Beschlagteils des Sitzneigungseinstellbeschlags 24 und der oberen Schwinge 27, welche zusammen mit der Quertraverse 29 die beweglichen Teile eines Sitzneigungseinstellers bilden, ändert sich die Höhe des vorderen Endes der Sitzschale relativ zu ihrem hinteren Ende und damit deren Neigung.

Um das Gewicht der Sitzschale samt Sitzpolster 33 zu kompensieren und dadurch den Sitzneigungseinstellbeschlag 24 zu entlasten, ist eine Kompensationsfeder 35 vorgesehen. Die als Schenkelfeder ausgebildete Kompensationsfeder 35 ist mit ihrer zentralen Wickelung auf dem Gelenkzapfen 25 angeordnet, wobei auf der Oberseite ein erster Schenkel 35' nach vorne und ein zweiter Schenkel 35" nach hinten absteht. Der erste Schenkel 35' greift unter die Quertraverse 29 und übt ein Moment nach oben aus. An der vorderen Schwinge 11 ist im Bereich des oberen Lagerbolzens 19 ein nach innen abstehender Anschlag 37 angeformt, auf dessen Unterseite der zweite Schenkel 35" erfindungsgemäß anliegt und abgestützt ist. Der Vorspannwinkel zwischen den beiden Schenkeln 35' und 35" und damit die Vorspannung der Kompensationsfeder 35 hängt dadurch vom Winkel zwischen der oberen Schwinge 27 und der vorderen Schwinge 11 ab, d.h. von der Höheneinstellung.

### Bezugszeichenliste

- 1: Fahrzeugsitz
- 5: Unterschiene
- 7: Oberschiene
- 9: Adapter
- 11: vordere Schwinge
- 13: unterer Lagerbolzen
- 15: hintere Schwinge
- 19: oberer Lagerbolzen
- 21: Sitzrahmen-Seitenteil
- 23: Rückenlehne
- 24: Sitzneigungseinstellbeschlag
- 25: Gelenkzapfen
- 27: obere Schwinge
- 29: Quertraverse
- 33: Sitzpolster
- 35: Kompensationsfeder
- 35': erster Schenkel
- 35": zweiter Schenkel
- 37: Anschlag

## Patentansprüche

1. Fahrzeugsitz, insbesondere Kraftfahrzeugsitz, mit einem Neigungseinsteller (27, 29) zur Einstellung der Neigung eines Sitzpolsters (33) des Fahrzeugsitzes (1) relativ zu einem Unterbau (5, 7) und einem Höheneinsteller (11, 15) zur Einstellung der Höhe des Sitzpolsters (33) relativ zum Unterbau (5, 7), wobei zur Kompensation wenigstens des Gewichts des Sitzpolsters (33) eine Kompensationsfeder (35) vorgesehen ist, welche einen beweglichen Teil des Neigungseinstellers (27, 29) beaufschlagt, **dadurch gekennzeichnet, daß** die Kompensationsfeder (35) an einen beweglichen Teil (11) des Höheneinstellers (11, 15) gekoppelt ist.

2. Fahrzeugsitz nach Anspruch 1, **dadurch gekennzeichnet, daß** die Kompensationsfeder (35) als Schenkelfeder mit zwei Schenkeln (35', 35") ausgebildet ist.

3. Fahrzeugsitz nach Anspruch 1 oder 2, **dadurch gekennzeichnet, daß** der bewegliche Teil des Neigungseinstellers (27, 29) einen Bestandteil eines ansonsten festen Sitzrahmens (21, 29) bildet, welcher das Sitzpolster (33) wenigstens mittelbar trägt.

4. Fahrzeugsitz nach Anspruch 2 und 3, **dadurch gekennzeichnet, daß** der bewegliche Teil des Neigungseinstellers (27, 29) eine Quertraverse (29) des Sitzrahmens (21, 29) umfaßt, wobei die Kompensationsfeder (35) mit dem ersten Schenkel (35') die Quertraverse (29) beaufschlagt.

5. Fahrzeugsitz nach Anspruch 3 oder 4, **dadurch gekennzeichnet, daß** der Höheneinsteller (11, 15) Schwingen aufweist, welche durch Schwenkbewegungen die Höhe des Sitzrahmens (21, 29) relativ zum Unterbau (5, 7) ändern.

6. Fahrzeugsitz nach Anspruch 5, **dadurch gekennzeichnet, daß** die Kompensationsfeder (35) an einer Schwinge (11) des Höheneinstellers (11, 15) abgestützt ist.

7. Fahrzeugsitz nach Anspruch 2 und 6, **dadurch gekennzeichnet, daß** die Schwinge (11) einen seitlich angeformten Anschlag (37) zur Abstützung des zweiten Schenkels (35") der Kompensationsfeder (35) aufweist.

## Claims

1. Vehicle seat, especially motor vehicle seat, having an inclination adjuster (27, 29) for adjusting the inclination of a seat cushion (33) of the vehicle seat (1) relative to a substructure (5, 7), and a height adjuster (11, 15) for adjusting the height of the seat cushion (33) relative to the substructure (5, 7), a compensation spring (35) which acts on a moving part of the inclination adjuster (27, 29) being provided to compensate for at least the weight of the seat cushion (33), **characterized in that** the compensating spring (35) is coupled to a moving part (11) of the height adjuster (11, 15).

2. Vehicle seat according to Claim 1, **characterized in that** the compensating spring (35) is formed as a torsion spring with two legs (35', 35").

3. Vehicle seat according to Claim 1 or 2, **characterized in that** the moveable part of the inclination adjuster (27, 29) forms a constituent part of an otherwise fixed seat frame (21, 29), which carries the seat cushion (33), at least indirectly.

4. Vehicle seat according to Claim 2 and 3, **characterized in that** the moveable part of the inclination adjuster (27, 29) comprises a cross member (29) of the seat frame (21, 29), the compensating spring (35) acting on the cross member (29) by means of the first leg (35').

5. Vehicle seat according to Claim 3 or 4, **characterized in that** the height adjuster (11, 15) has swinging arms which change the height of the seat frame (21, 29) relative to the substructure (5, 7) by means of pivoting movements.

6. Vehicle seat according to Claim 5, **characterized in that** the compensating spring (35) is supported on a swinging arm (11) of the height adjuster (11, 15).

7. Vehicle seat according to Claims 2 and 6, **characterized in that** the swinging arm (11) has a laterally integrally moulded stop (37) to support the second leg (35") of the compensating spring (35).

## Revendications

1. Siège de véhicule, en particulier siège de véhicule automobile, avec un dispositif de réglage d'inclinaison (27, 29) pour le réglage de l'inclinaison d'un rembourrage de siège (33) du siège de véhicule (1) par rapport à une infrastructure (5, 7) et un dispositif de réglage en hauteur (11, 15) pour le réglage de la hauteur du rembourrage de siège (33) par rapport à l'infrastructure (5, 7), à l'occasion de quoi pour la compensation au moins du poids du rembourrage de siège (33) est prévu un ressort de compensation (35), lequel est connecté à une partie mobile du dispositif de réglage d'inclinaison (27, 29), **caractérisé par le fait que** le ressort de compensation (35) est couplé à une partie mobile (11) du dispositif de réglage en hauteur (11, 15).

2. Siège de véhicule selon la revendication 1, **caractérisé par le fait que** le ressort de compensation (35) est réalisé sous la forme d'un ressort à branches avec deux branches (35', 35").

3. Siège de véhicule selon l'une des revendications 1 ou 2, **caractérisé par le fait que** la partie mobile du dispositif de réglage d'inclinaison (27, 29) forme un composant d'un cadre de siège (21, 29) sinon fixe, lequel supporte au moins indirectement le rembourrage de siège (33).

4. Siège de véhicule selon les revendications 2 et 3, **caractérisé par le fait que** la partie mobile du dispositif de réglage d'inclinaison (27, 29) comprend une traverse transversale (29) du cadre de siège (21, 29), à l'occasion de quoi le ressort de compensation (35) est connecté à la traverse transversale (29) par la première branche (35').

5. Siège de véhicule selon l'une des revendications 3 ou 4, **caractérisé par le fait que** le dispositif de réglage de hauteur (11, 15) présente des bras oscillants, lesquels, par des mouvements de pivotement, modifient la hauteur du cadre de siège (21, 29) par rapport à l'infrastructure (5, 7).

6. Siège de véhicule selon la revendication 5, **caractérisé par le fait que** le ressort de compensation (35) est supporté sur un bras oscillant (11) du dispositif de réglage de hauteur (11, 15).

7. Siège de véhicule selon les revendications 2 et 6, **caractérisé par le fait que** le bras oscillant (11) présente un arrêt (37) formé latéralement pour le support de la deuxième branche (35") du ressort de compensation (35).
